# EUROPÄISCHE PATENTSCHRIFT

(11) **EP 3 741 919 B1**
(45) Veröffentlichungstag und Bekanntmachung des Hinweises auf die Patenterteilung: **08.04.2026**
(21) Anmeldenummer: 19176182.4
(22) Anmeldetag: 23.05.2019
(51) Int. Cl.: E03C 1/122, E03F 3/04, F16L 41/03

(54) **KUGELABZWEIG**
BALL JUNCTION
EMBRANCHEMENT BOULE

(43) Veröffentlichungstag der Anmeldung: 25.11.2020
(73) Patentinhaber: Georg Fischer JRG AG, 4450 Sissach (CH)
(72) Erfinder: SCHOCH, Philip, 8500 Frauenfeld (CH)
(74) Vertreter: Fenner, Seraina

(56) Entgegenhaltungen:
- WO-A1-2013/110370
- WO-A1-2019/030416
- DE-U1- 9 105 196
- KR-A- 20120 076 006
- US-A- 5 099 874
- US-B1- 10 105 282

## Beschreibung

Die Erfindung betrifft ein Anschlusselement zum Anschliessen von mindestens einer Toilette an mindestens einer Entsorgungsleitung, wobei das Anschlusselement einen Rumpf aufweist, wobei am Rumpf mehrere Anschlussstutzen zum Anschliessen von mindestens einer Toilette und zum Anschliessen an mindestens einer Entsorgungsleitung angeordnet sind sowie ein Verfahren zu seiner Herstellung.

Aus dem Stand der Technik sind solche Anschlusselement für eine Toilette auch unter dem Begriff Kugelabzweig bekannt, wobei solche Anschlusselemente ausschliesslich zum Anschliessen eines einzigen von der Toilette abgehenden Ausgangsstutzens ausgebildet sind, da die heutigen Toiletten das Fäkalabwasser und den Urin nicht trennen, sondern durch denselben Ausgangsstutzen in dieselbe Entsorgungsleitung abführen.

Zukünftige Toiletten weisen zwei Ausgangsstutzen auf die den Urin und das Fäkalabwasser in eine separate Entsorgungsleitung leiten. Dies bringt den Vorteil mit sich, dass der Urin und das Fäkalabwasser getrennt gesammelt werden können und eine entsprechend Aufbereitung durchgeführt werden kann, welche eine Wiederverwertung des Urins und Fäkalabwassers erlaubt. Da der Raum bzw. der Schacht zum Anschliessen einer Toilette an eine Entsorgungsleitung sehr begrenzt ist und in einem Hotel oder sonstigen öffentlichen Gebäude oder auch einem Mehrfamilienhaus mehrere Toiletten vorhanden sind, müssen mehrere Anschlussmöglichkeiten vorhanden sein, wobei der Platz und die Zugänglichkeit in einem solchen Schacht für den Einbau von zwei einzelnen Kugelabzweigen zum separaten Anschliessen der Urin- und Fäkalabwasserentsorgung, wie aus dem Stand der Technik bekannt ist, nicht gegeben ist.

Ein Anschlusselement zum getrennten Abführen von Urin und Fäkalien ist beispielsweise in KR20120076006A offenbart. Dabei sind zwei konzentrischen Entsorgungsleitungen vorgesehen. Durch die innere Entsorgungsleitung werden Fäkalien, zwischen der äusseren und der inneren Entsorgungsleitung Urin abgeführt. Die Anschlussstutzen für Fäkalien werden dabei durch den Zwischenraum zwischen den beiden Entsorgungsleitungen geführt.

Es ist Aufgabe der Erfindung ein Anschlusselement vorzuschlagen, welches den Urin und die Fäkalabwasser separat den Entsorgungsleitungen zuführt und eine kompakte Baugrösse aufweist.

Diese Aufgabe wird erfindungsgemäss durch ein Anschlusselement gemäss Patentanspruch 1 gelöst.

Das erfindungsgemässe Anschlusselement ist einteilig bzw. einstückig ausgebildet, wodurch Trennstellen die zusätzlich abgedichtet werden müssten vermieden werden. Der Rumpf weist eine kugelförmige Form auf bzw. eine Form von zwei sich schneidenden Kugeln, diese dient einer optimalen querzulaufenden Einströmung des Urins und des Fäkalabwassers über die querzulaufenden Toilettenanschlussstutzen trotz den von oben her vertikal das Anschlusselement durchströmenden Medien, welche bereits in die Entsorgungsleitungen eingespült wurden. Durch die kugelförmige Form des Rumpfs strömt das Medium bzw. der Urin und das Fäkalabwasser entlang der Seitenwände der Hohlkörper und es bildet sich kein zugangsversperrender Vorhang vor den in die Hohlkörper mündenden Toilettenanschlussstutzen, welche das Einströmen erschweren oder verhindern würden.

Das Anschlusselement weist mindestens vier Entsorgungsleitungsanschlussstutzen und mindestens zwei Toilettenanschlussstutzen auf; dadurch kann der Urin und das Fäkalabwasser getrennt gesammelt und behandelt werden.

Eine weitere vorteilhafte Ausgestaltung besteht darin, dass das Anschlusselement mindestens vier Toilettenanschlussstutzen zum Anschliessen von mehreren Toiletten aufweist. Durch ein bevorzugtes erfindungsgemässes Anschlusselement können zwei Toiletten mit jeweils zwei separaten Ausgangsstutzen für Urin und Fäkalabwasser einer Toilette an jeweils zwei Entsorgungsleitungen angeschlossen werden. Dies erlaubt eine konsequente Trennung zwischen Urin und Fäkalabwasser.

Eine bevorzugte Ausführungsform besteht darin, dass das erfindungsgemässe Anschlusselement einen Rumpf mit zwei Hohlkörper aufweist, wobei die beiden Hohlkörper eine gemeinsame Zwischenwand aufweisen. Die Hohlkörper sind vorzugsweise als zwei Kugelsegmente ausgebildet die ineinander übergehen, wobei die Zwischenwand im Übergangsbereich angeordnet ist. Es ist vorteilhaft, wenn der eine Hohlkörper durch den das Fäkalabwasser strömt grösser dimensioniert ist als der zweite Hohlkörper für den Urin.

Als bevorzugte Ausführungsform hat sich gezeigt, wenn jeweils zwei Entsorgungsleitungsanschlussstutzen an jeweils einem Hohlkörper angeordnet sind.

Vorzugsweise liegen die beiden Entsorgungsleitungsanschlussstutzen am selben Hohlkörper sich gegenüber und verlaufen konzentrisch zueinander. Es ist vorteilhaft wenn der obige Entsorgungsleitungsstutzen als Muffe und der untere als Nippel ausgebildet ist.

Vorteilhaft ist es, wenn die Toilettenanschlussstutzen jeweils auf derselben Schnittebene wie die Entsorgungsleitungsanschlussstutzen liegen. Das heisst, die Anschlussstutzen für das Fäkalabwasser sind alle in einer Schnittebene angeordnet wie auch alle Anschlussstutzen für den Urin in einer Ebene liegen.

Als vorteilhaft hat sich gezeigt, wenn die Toilettenanschlussstutzen jeweils in einem Winkel zwischen 45° - 90° zum oberen Entsorgungsleitungsanschlussstutzen ausgerichtet sind. Speziell bevorzugt ist eine Ausführungsform in der der Toilettenanschlussstutzen in einem Winkel von 88.5° zum oberen Entsorgungsleitungsanschlussstutzen angeordnet ist.

Vorteilhaft ist es, wenn die Toilettenanschlussstutzen, die auf dieselbe Seite gerichtet und zum Anschliessen derselben Toilette sind, parallel verlaufen.

Alle Ausgestaltungmöglichkeiten sind untereinander frei kombinierbar.

Ausführungsbeispiele der Erfindung werden anhand der Figuren beschrieben, wobei sich die Erfindung nicht nur auf die Ausführungsbeispiele beschränkt. Es zeigen:
- Fig. 1: eine dreidimensionale Ansicht eines erfindungsgemässen Anschlusselements,
- Fig. 2: eine dreidimensionale Ansicht eines erfindungsgemässen Anschlusselements mit einem Teilschnitt von zwei Ausführungsformen,
- Fig. 3: eine Schnittansicht eines erfindungsgemässen Anschlusselements, wobei die Schnittebene durch die Anschlussstutzen des Fäkalabwassers verläuft,
- Fig. 4: eine Ansicht von vorne,
- Fig. 5: eine Seitenansicht und
- Fig. 6: eine dreidimensionale Ansicht einer alternativen Ausführungsform des erfindungsgemässen Anschlusselements.

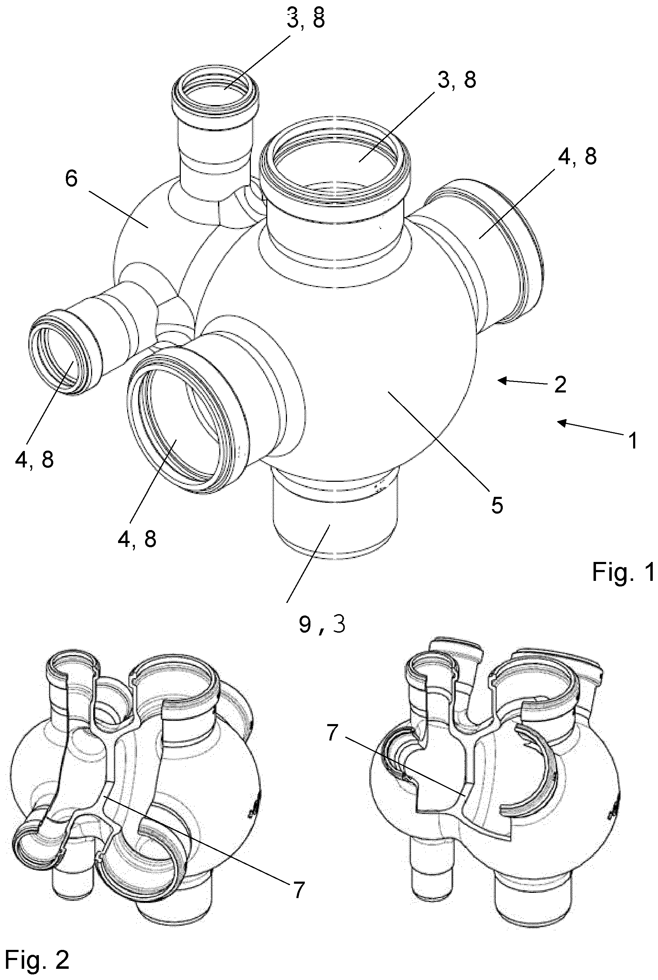

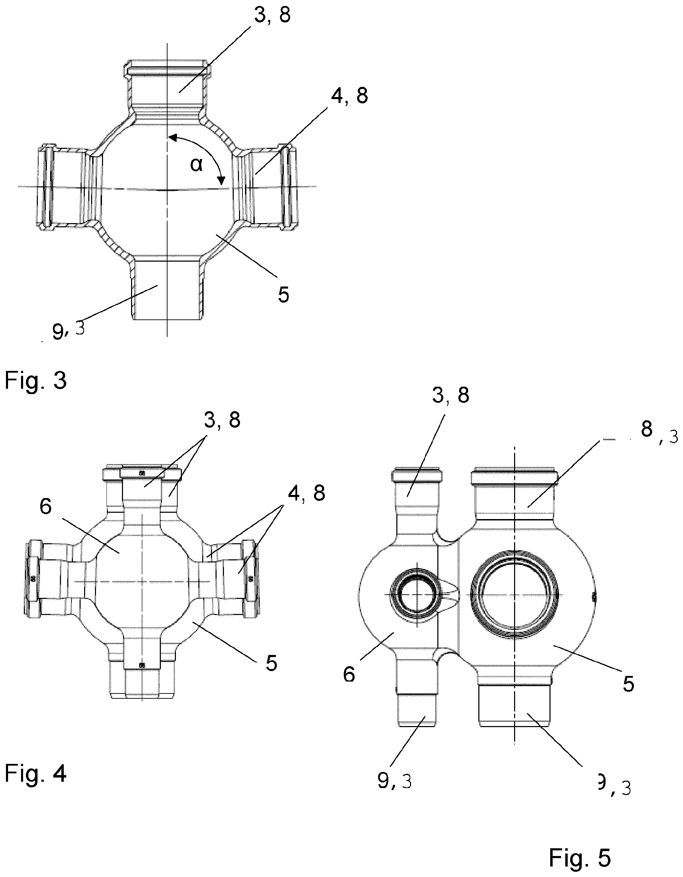

Die in Fig. 1 dargestellte Zeichnung zeigt ein erfindungsgemässes Anschlusselement 1 zum Anschliessen einer Toilette an mindestens einer Entsorgungsleitung, wobei hier ein Anschlusselement 1 dargestellt ist, dass sich zum Anschliessen an zwei Toiletten und zwei Entsorgungsleitungen eignet. Das Anschlusselement 1 weist einen Rumpf 2 auf an dem mehrere Anschlussstutzen 3, 4 angeordnet sind. Die vertikal ausgerichteten Anschlussstutzen 3 dienen dem Anschliessen an die Entsorgungsleitungen, welche in der Regel vertikal in einem Schacht verlaufen und deshalb nicht viel Platz vorhanden ist. Die Entsorgung des Urins und des Fäkalabwassers verläuft getrennt, das heisst, die Toilette weist zwei Anschlüsse auf, die den Urin und das Fäkalabwasser jeweils separat der entsprechenden Entsorgungsleitung über das erfindungsgemässe Anschlusselement 1 zuleiten. Die grösser dimensionierten Entsorgungsanschlussstutzen 3, welche konzentrisch untereinander angeordnet sind, dienen dem Anschliessen an die Entsorgungsleitung für Fäkalabwasser. Die daneben angeordneten Entsorgungsanschlussstutzen 3 sind kleiner ausgebildet und dienen dem Anschliessen an die Entsorgungsleitung für Urin. Der Rumpf 2 weist zwei voneinander abgetrennte Hohlkörper 5, 6 auf. Die Hohlkörper sind vorzugsweise mit einer Zwischenwand 7 (in Fig. 2 ersichtlich) voneinander getrennt, wodurch der Urin und das Fäkalabwasser nicht vermischt werden. Die Anschlussstutzen 4 an die Toilette liegen entsprechend dem abzuführenden Medium in derselben Schnittebene wie die entsprechenden Entsorgungsstutzen 3, dies ist gut aus den Fig. 3 bis 5 zu erkennen in denen das erfindungsgemässe Anschlusselement 1 als Ansicht oder in einem Schnitt dargestellt ist.

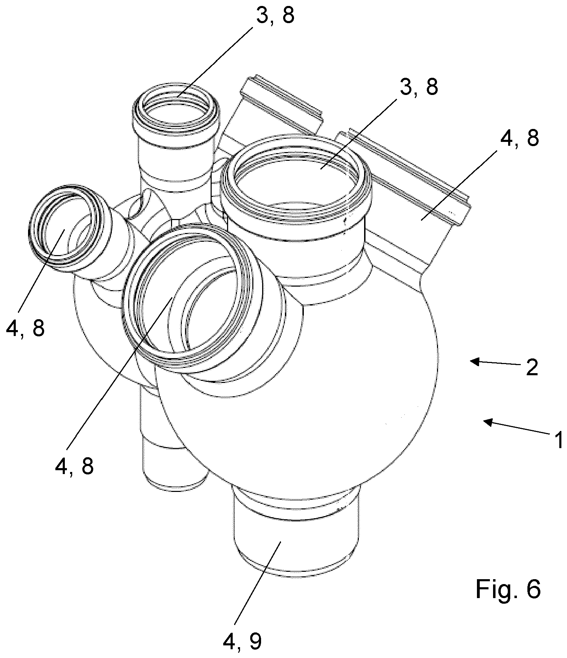

Vorzugsweise sind die Toilettenanschlussstutzen 4 in einem Winkel α von 45° - 90° zum oberen Entsorgungsanschlussstutzen 3, welcher vertikal verläuft, ausgerichtet, wobei eine bevorzugte Variante die in den Figuren 1 bis 5 mit einem Winkel α von 88.5° gezeigt ist und eine weitere bevorzugte Variante in Fig. 6 darstellt, welche einen Winkel α von 45° aufweist, wobei auch andere Anordnungen der Stutzen denkbar sind.

Der Rumpf 2 des Anschlusselements weist eine kugelartige Form auf, wobei die beiden Hohlkörper 5,6 vorzugsweise zwei in sich übergehende Kugelsegmente bilden und vorzugsweise deren horizontal verlaufende Mittelachse fluchten. Zudem ist die Zwischenwand 7 vorzugsweise im Übergangsbereich der beiden Kugelsegmente angeordnet, was aus Fig. 2 zu entnehmen ist.

Die Toilettenanschlussstutzen 4, die auf dieselbe Seite gerichtet sind verlaufen vorzugsweise parallel. Zudem sind die Toilettenanschlussstutzen 4 vorzugsweise mittig auf das Zentrum des jeweiligen Kugelsegmentes gerichtet.

Die Entsorgungsanschlussstutzen 3 sind vorzugsweise jeweils mittig auf die Kugelsegmente gerichtet.

Die Toilettenanschlussstutzen 4 sowie die oberen Entsorgungsleitungsanschlussstutzen 3 sind vorzugsweise als Muffen 8 ausgebildet und werden so an die entsprechenden Rohre angeschlossen. Die unteren Entsorgungsanschlussstutzen 3 sind vorzugsweise als Nippel 9 ausgebildet und werden in ein Rohrende mit einem Muffenende eingesteckt.

### Bezugszeichenliste

- 1: Anschlusselement
- 2: Rumpf
- 3: Anschlusselement Entsorgungsleitung
- 4: Anschlusselement Toilette
- 5: Hohlkörper Fäkalabwasser
- 6: Hohlkörper Urin
- 7: Zwischenwand
- 8: Muffe
- 9: Nippel

- α: Winkel zwischen Entsorgungsanschlussstutzen und Toilettenanschlussstutzen

## Patentansprüche

1. Anschlusselement (1) zum Anschliessen von mindestens einer Toilette an mindestens einer Entsorgungsleitung, wobei das Anschlusselement (1) einen kugelförmigen Rumpf (2) aufweist, wobei am Rumpf (2) mehrere Anschlussstutzen (3, 4) zum Anschliessen von mindestens einer Toilette und zum Anschliessen an mindestens einer Entsorgungsleitung angeordnet sind, wobei der Rumpf (2) mindestens zwei voneinander abgetrennte, nebeneinander angeordnete Hohlkörper (5, 6) aufweist, um ein Vermischen des Urins und Fäkalabwassers, die bei Gebrauch die Hohlkörper (5, 6) durchströmen, zu verunmöglichen, und wobei das Anschlusselement (1) mindestens vier Entsorgungsleitungsanschlussstutzen (3) und mindestens zwei Toilettenanschlussstutzen (4) aufweist.

2. Anschlusselement (1) nach Anspruch 1, **dadurch gekennzeichnet, dass** das Anschlusselement (1) mindestens vier Toilettenanschlussstutzen (4) zum Anschliessen von mehreren Toiletten aufweist.

3. Anschlusselement (1) nach einem der Ansprüche 1 oder 2, **dadurch gekennzeichnet, dass** der Rumpf (2) zwei Hohlkörper (5, 6) aufweist, wobei die beiden Hohlkörper (5, 6) eine gemeinsame Zwischenwand (7) aufweisen.

4. Anschlusselement (1) nach einem der Ansprüche 1 bis 3, **dadurch gekennzeichnet, dass** jeweils zwei Entsorgungsleitungsanschlussstutzen (3) an jedem der Hohlkörper (5, 6) angeordnet sind.

5. Anschlusselement (1) nach Anspruch 4, **dadurch gekennzeichnet, dass** jeweils die beiden Entsorgungsleitungsanschlussstutzen (3) am selben Hohlkörper (5, 6) sich gegenüberliegen und konzentrisch zueinander verlaufen.

6. Anschlusselement (1) nach einem der Ansprüche 1 bis 5, **dadurch gekennzeichnet, dass** die Toilettenanschlussstutzen (4) von Urin und Fäkalabwasser jeweils auf derselben Schnittebene liegen wie die Entsorgungsleitungsanschlussstutzen (3) des entsprechenden Mediums.

7. Anschlusselement (1) nach einem der Ansprüche 1 bis 6, **dadurch gekennzeichnet, dass** die Toilettenanschlussstutzen (4) jeweils in einem Winkel (α) zwischen 45° - 90° zum oberen Entsorgungsleitungsanschlussstutzen (3) ausgerichtet sind, vorzugsweise in einem Winkel (α) von 88.5° zum oberen Entsorgungsleitungsanschlussstutzen (3).

8. Anschlusselement (1) nach einem der Ansprüche 1 bis 7, **dadurch gekennzeichnet, dass** die Toilettenanschlussstutzen (4) die auf dieselbe Seite gerichtet sind parallel verlaufen.

9. Verfahren zum Herstellen eines Anschlusselements (1) nach einem der Ansprüche 1 bis 8, **dadurch gekennzeichnet, dass** das Anschlusselement (1) durch additive Fertigung hergestellt wird.

## Claims

1. Connecting element (1) for connecting at least one toilet to at least one disposal line, wherein the connecting element (1) comprises a spherical body (2), wherein a plurality of connection nozzles (3, 4) for connecting at least one toilet and for connecting to at least one disposal line is arranged on the body (2), wherein the body (2) has at least two hollow bodies (5, 6) separated from one another, arranged next to one another, in order to prevent mixing of the urine and faecal wastewater flowing through the hollow bodies (5, 6) during use, and wherein the connecting element (1) comprises at least four disposal-line connection nozzles (3) and at least two toilet connection nozzles (4).

2. Connecting element (1) according to Claim 1, **characterized in that** the connecting element (1) comprises at least four toilet connection nozzles (4) for connecting a plurality of toilets.

3. Connecting element (1) according to one of Claims 1 or 2, **characterized in that** the body (2) has two hollow bodies (5, 6), wherein the two hollow bodies (5, 6) have a common intermediate wall (7).

4. Connecting element (1) according to any one of Claims 1 to 3, **characterized in that** in each case two disposal-line connection nozzles (3) are arranged on each of the hollow bodies (5, 6).

5. Connecting element (1) according to Claim 4, **characterized in that** in each case the two disposal-line connection nozzles (3) on the same hollow body (5, 6) lie opposite one another and extend concentrically with respect to one another.

6. Connecting element (1) according to any one of Claims 1 to 5, **characterized in that** the toilet connection nozzles (4) for urine and faecal wastewater in each case lie in the same sectional plane as the disposal-line connection nozzles (3) of the corresponding medium.

7. Connecting element (1) according to any one of Claims 1 to 6, **characterized in that** the toilet connection nozzles (4) are each aligned at an angle (α) between 45° and 90° relative to the upper disposal-line connection nozzle (3), preferably at an angle (α) of 88.5° relative to the upper disposal-line connection nozzle (3).

8. Connecting element (1) according to any one of Claims 1 to 7, **characterized in that** the toilet connection nozzles (4) which are directed to the same side extend parallel to one another.

9. Method for producing a connecting element (1) according to any one of Claims 1 to 8, **characterized in that** the connecting element (1) is produced by additive manufacturing.

## Revendications

1. Élément de raccordement (1) destiné au raccordement d'au moins une toilette à au moins une conduite d'évacuation, l'élément de raccordement (1) présentant une enveloppe sphérique (2), plusieurs manchons de raccordement (3, 4) destinés au raccordement d'au moins une toilette et au raccordement à au moins une conduite d'évacuation étant disposés sur l'enveloppe (2), l'enveloppe (2) présentant au moins deux corps creux (5, 6) séparés l'un de l'autre, disposés côte à côte, afin de rendre impossible un mélange de l'urine et des eaux usées fécales qui, lors de l'utilisation, traversent les corps creux (5, 6), et l'élément de raccordement (1) présentant au moins quatre manchons de raccordement de conduites d'évacuation (3) et au moins deux manchons de raccordement de toilettes (4).

2. Élément de raccordement (1) selon la revendication 1, **caractérisé en ce que** l'élément de raccordement (1) présente au moins quatre embouts de raccordement de toilettes (4) pour raccorder plusieurs toilettes.

3. Élément de raccordement (1) selon l'une quelconque des revendications 1 ou 2, **caractérisé en ce que** l'enveloppe (2) présente deux corps creux (5, 6), les deux corps creux (5, 6) présentant une paroi intermédiaire commune (7).

4. Élément de raccordement (1) selon l'une quelconque des revendications 1 à 3, **caractérisé en ce que**, dans chaque cas, deux manchons de raccordement de conduites d'évacuation (3) sont disposés sur chacun des corps creux (5, 6).

5. Élément de raccordement (1) selon la revendication 4, **caractérisé en ce que**, dans chaque cas, les deux manchons de raccordement de conduites d'évacuation (3) disposés sur le même corps creux (5, 6) sont opposés l'un à l'autre et s'étendent de manière concentrique l'un par rapport à l'autre.

6. Élément de raccordement (1) selon l'une quelconque des revendications 1 à 5, **caractérisé en ce que** les manchons de raccordement de toilettes (4) pour l'urine et les eaux usées fécales se trouvent chacun dans le même plan de coupe que les manchons de raccordement de conduites d'évacuation (3) du milieu correspondant.

7. Élément de raccordement (1) selon l'une quelconque des revendications 1 à 6, **caractérisé en ce que** les manchons de raccordement de toilettes (4) sont chacun orientés selon un angle (α) compris entre 45° et 90° par rapport au manchon de raccordement de conduite d'évacuation supérieur (3), de préférence selon un angle (α) de 88,5° par rapport au manchon de raccordement de conduite d'évacuation supérieur (3).

8. Élément de raccordement (1) selon l'une quelconque des revendications 1 à 7, **caractérisé en ce que** les manchons de raccordement de toilettes (4) qui sont orientés du même côté s'étendent parallèlement.

9. Procédé de fabrication d'un élément de raccordement (1) selon l'une quelconque des revendications 1 à 8, **caractérisé en ce que** l'élément de raccordement (1) est fabriqué par fabrication additive.
